# EUROPÄISCHE PATENTSCHRIFT

(11) **EP 0 710 590 B1**
(45) Veröffentlichungstag und Bekanntmachung des Hinweises auf die Patenterteilung: **16.12.1998**
(21) Anmeldenummer: 95116779.0
(22) Anmeldetag: 25.10.1995
(51) Int. Cl.: B60R 21/20, F16F 1/36

(54) **Airbagmodul**
Air bag module
Module de sac gonflable

(30) Priorität: 05.11.1994 DE 4439576
(43) Veröffentlichungstag der Anmeldung: 08.05.1996
(73) Patentinhaber: ADAM OPEL AG, 65423 Rüsselsheim (DE)
(72) Erfinder: Rick, Ulrich, Dipl.-Ing., D-55595 Roxheim (DE); Klenk, Jürgen, Dipl.-Ing., D-65468 Trebur (DE)
(74) Vertreter: Kümpfel, Heinz, Dipl.-Ing.

(56) Entgegenhaltungen:
- DE-A- 3 925 761
- DE-U- 8 903 786

## Beschreibung

Die Erfindung betrifft ein Airbagmodul gemäß dem Oberbegriff des Patentanspruches.

Es ist bekannt, ein Airbagmodul, welches im wesentlichen ein Gehäuse, einen im Gehäuse gefaltet angeordneten Gassack und einen Gasgenerator umfaßt, mittels Trägern oder Streben an der Stirnwand oder an einem Querträger einer Fahrzeugstruktur zu befestigen. Die Befestigung erfolgt im allgemeinen starr mittels Schrauben. Um die Befestigung des Airbagmoduls zu vereinfachen und montagefreundlicher zu machen, wurde mit DE-Patentanmeldung P 43 38 666.0-21 vorgeschlagen, das Gehäuse eines Airbagmoduls an strukturtragenden Teilen mittels eines an einem Träger des Gehäuses befindlichen hakenartigen Zapfens einzuhängen. Dabei sind zwischen Zapfen und Gehäuse Zwischenlagen aus Gummi vorgesehen, welche sowohl Toleranzen der gefügten Bauteile überbrücken als auch das Airbaggehäuse von Schwingungen des Aufbaues entkoppeln. Dabei wird eine möglichst starre Anbindung des Airbagmoduls an der Fahrzeugstruktur angestrebt.

Gemäß DE 39 25 761 A1 ist es bekannt, zum Zwecke der Vibrationsunterdrückung für ein Lenkrad ein am Lenkrad befestigtes Airbagmodul oder Teile von diesem, wie z. B. den Gasgenerator, durch elastische Mittel am Lenkradkörper so zu befestigen, daß die Masse dieser elastisch angebrachten Teile als Tilgermasse gegenüber Lenkradtorsionsschwingungen wirkt.

Bei allen bekannten Airbagmodulen wird jedoch Sorge dafür getroffen, daß die Befestigung vor allem in der Schußrichtung des Luftsacks möglichst stabil ist, da beim Abbremsen des Luftsackes nach dem Entfaltungsvorgang hohe Massenkräfte wirken, die von der Befestigung aufgenommen werden müssen. Diese Massenkräfte können so groß sein, daß sogar das Gewebe des Luftsackes reißt, so daß schon Überlegungen angestellt wurden, den Luftsack im Bereich seiner Anbindung an das Gehäuse zu verstärken. Jedoch nimmt damit das Flächengewicht des Luftsackes und somit auch die beschleunigte Masse zu. Es wachsen damit auch die Massenkräfte beim Abbremsen des Luftsackes. Außerdem kann das Flächengewicht des Luftsackes nicht beliebig vergrößert werden, da sonst bei einem vorzeitigen Kontakt des sich aufblähenden Luftsackes mit dem Insassen, einem sogenannten Anschießen, Verletzungsgefahr infolge der erheblichen Massenkräfte entstehen würde.

Mit DE-U-89 03 786 ist eine Befestigung für eine Airbageinheit beschrieben, bei der eine Grundplatte der Airbageinheit einen Gasgenerator und einen Luftsack trägt, wobei die Grundplatte mit einer Vielzahl von Bolzen an einem Lenkradkorb so verbunden ist, daß sich die Verankerungspunkte der Bolzen unter der Massenkraft des sich bis zum Endpunkt aufgeblähten Luftsackes plastisch verformen. Damit kann die auf die Bolzen wirkende Kraft am Ende des Entfaltungsvorganges des Luftsackes reduziert werden. Die Airbageinheit ist jedoch mit dem Lenkrad schwingungsstarr verbunden und wird während des normalen Fahrzeugbetriebs ständig den Fahrzeugschwingungen unterworfen.

Aufgabe der Erfindung ist es, ein Airbagmodul zu schaffen, welches durch seine Befestigung am Fahrzeugkörper elastisch und damit von Schwingungen entkoppelt befestigt ist und bei dem gleichzeitig die durch das Abbremsen des Luftsackes am Ende des Entfaltungsvorganges infolge der Massenträgheit auftretenden Kräfte auf die Airbagmodulbefestigung einerseits und auf die Anbindung des Luftsackes am Gehäuse andererseits reduziert werden.

Erfindungsgemäß wird diese Aufgabe mit den Merkmalen des Patentanspruches gelöst.

Damit kann sich am Ende des Entfaltungsvorganges des Luftsackes der Luftsack und die mit ihm vor den nachgiebigen Elementen befindlichen Teile unter der Massenkraft der sich dann abrupt abbremsenden Luftsackmasse um einen begrenzten Betrag in Schußrichtung bewegen, wobei diese Bewegung einen Bremsweg darstellt, auf welchem die auftretende Beschleunigung vermindert und so auch die Massenkraft reduziert wird. Es werden dadurch die den Airbagmodul tragenden Fahrzeugstrukturteile und insbesondere das Luftsackgewebe wesentlich geringer belastet. Das Luftsackgewebe kann dadurch leichter ausgeführt werden mit dem Ergebnis, daß die Haltekräfte an seiner Befestigung weiter reduziert sind gegenüber einem schweren Gewebe, obwohl gleiche Entfaltungsgeschwindigkeiten auftreten. Darüber hinaus kann die Packdichte des Luftsackes verbessert, d. h. sein Packvolumen reduziert werden.

Da die nachgiebigen Elemente als Haltebüchsen mit asymmetrischem Federweg ausgebildet sind, wobei die Haltebüchsen als Lagerelemente zwischen dem Gehäuse des Airbagmoduls und den seitlich neben diesem befindlichen Querträgern angeordnet und mit ihrem größeren Federweg in Schußrichtung des Luftsackes ausgerichtet sind, verformen sie sich bevorzugt in Schußrichtung des Luftsackes. Sie wirken aber gleichzeitig als Schwingungsdämpfer und halten während des normalen Fahrzeugbetriebes vom Airbagmodul schädliche Schwingungen fern.

Derartige nachgiebige Elemente eignen sich gut für eine konstruktive Nachrüstung bereits vorhandener Airbagmodulbefestigungen, da der Änderungsumfang gegenüber bisher üblichen seitlichen Befestigungen gering ist.

Ausführungsbeisplele der Erfindung sind nachstehend anhand von Zeichnungen näher erläutert. Es zeigen
- Fig. 1:: einen schematisierten Schnitt durch eine Schalttafel eines Kraftfahrzeuges, in welchem ein Beifahrerairbagmodul angeordnet ist;
- Fig. 2:: eine vergrößerte Darstellung der Befestigung des Airbagmoduls an einem Träger;
- Fig. 3:: einen Schnitt entlang der Linie A-A in Figur 2;
- Fig. 4:: einen schematisierten Schnitt durch eine weitere Schalttafel eines Kraftfahrzeuges mit einem Beifahrerairbagmodul.

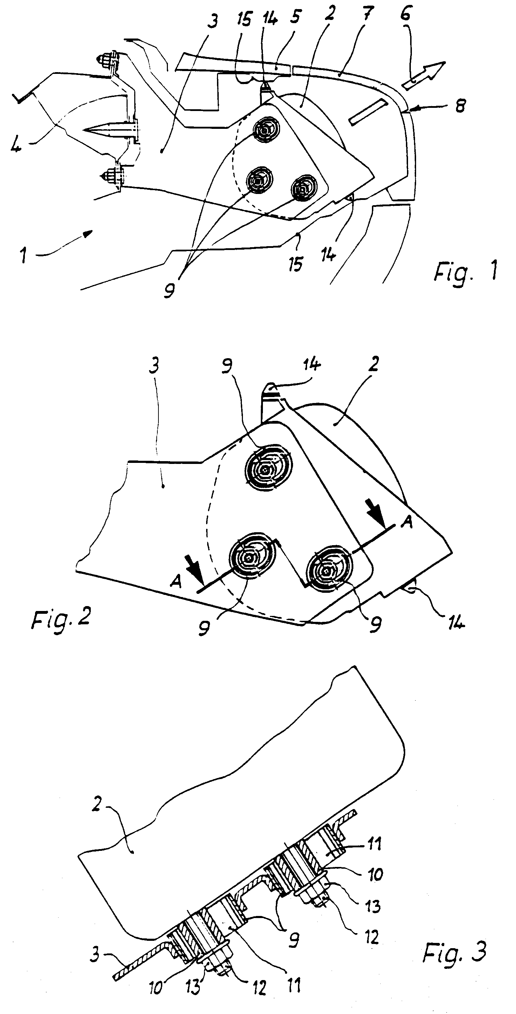

In den Figuren 1 bis 3 ist ein Airbagmodul 1 dargestellt, dessen Gehäuse 2 an seinen beiden Seiten mit je einem Träger 3 verbunden und vermittels dieser Träger 3 an der Stirnwand 4 eines Kraftfahrzeuges befestigt ist. Das Gehäuse 2 enthält in bekannter Weise einen Gasgenerator zum Aufblasen eines Luftsackes sowie einen Luftsack in zusammengefaltetem Zustand. Der Airbagmodul 1 ist durch eine Schalttafel 5 zum Fahrgastraum hin abgedeckt. In Schußrichtung 6 des im Gehäuse 2 befindlichen gefalteten Luftsackes weist die Schalttafel 5 eine aufklappbare Airbagabdeckung 7 auf, die mit einer Berstnaht 8 versehen ist, so daß bei Aktivierung des Airbags die beiden Hälften der Airbagabdeckung 7 wegklappen können und eine Öffnung für den sich entfaltenden Luftsack freigeben.

In den Trägern 3 sind jeweils drei Haltebüchsen 9 eingepreßt. Die Haltebuchsen 9 haben einen langrunden Querschnitt, dessen Längsachse in Schußrichtung 6 verläuft. In jeder Haltebuchse 9 befindet sich eine Bolzenaufnahmebuchse 10, die bezogen auf den Querschnitt an einem Ende des Langrundes angeordnet ist und zwar an dem Ende, welches der Schußrichtung 6 entgegenliegt. Zwischen der langrunden Haltebuchse 9 und der Bolzenaufnahmebuchse 10 befindet sich ein zumindest in der Längsrichtung der Haltebuchse 9 verformbares Gummielement 11. Der größere Anteil des verformbaren Gummielementes 11 liegt somit an der Seite der Bolzenaufnahmebuchse 10, welche in die Schußrichtung 6 des Luftsackes weist. Durch die Bolzenaufnahmebuchsen 10 erstrecken sich Bolzen 12, die mit dem Gehäuse 2 fest verbunden sind. Durch eine Mutter 13 oder sonstige Verschlußmittel ist jeder Bolzen 12 mit einer Bolzenaufnahmebuchse 10 fest verbunden. Somit sind die Träger 3 mit der tragenden Struktur des Fahrzeuges, nämlich der Stirnwand 4, starr verbunden. Das Gehäuse 2 mit Gasgenerator und Luftsack ist an den Trägern 3 über die Haltebuchsen 9, das Gummielement 11, die Bolzenaufnahmebuchsen 10 und die Bolzen 12 elastisch nachgiebig befestigt, wobei in Schußrichtung 6 des Luftsackes die größere Auslenkmöglichkeit für das Gehäuse 2 besteht.

Am Gehäuse 2 sind weiterhin Puffer 14 vorgesehen, welche sich an Teilen 15 der Schalttafel 5 abstützen. Die Puffer 14 bestehen aus weichem dämpfenden Werkstoff, z. B. Gummi. Sie verhindern Schwingungen des Gehäuses in seiner elastischen Aufhängung an den Trägern 3.

Bei Aktivierung des Airbags wird der Luftsack durch den Gasgenerator aufgeblasen. Der Luftsack entfaltet sich in Richtung auf den Fahrgastraum, nämlich in Schußrichtung 6. Die Reaktionskräfte während der Entfaltung des Luftsackes sind für den Airbagmodul unkritisch. Sie können relativ einfach als Druckkräfte über die Träger 3 aufgenommen werden. Nach Beendigung des Aufblasvorganges wird der stark beschleunigte Teil des Luftsackes jedoch in sehr kurzer Zeit wieder verzögert und es entsteht eine schlagartige Belastung auf die Luftsackbefestigung im Gehäuse 2. Diese Belastung wird wesentlich dadurch reduziert, daß das Gehäuse 2 in Schußrichtung 6 um einen begrenzten Weg ausweichen kann. Dieser Weg ergibt sich durch den Verformungsweg der Gummielemente 11. Die Befestigung des Luftsackes im Gehäuse 2 wird damit wesentlich geringer belastet, so daß deren Bauweise vereinfacht werden kann. Das Luftsackgewebe kann leichter gewählt werden. Die Gefahr von Verletzungen bei Passagieren durch ein sogenanntes Anschießen durch den Luftsack wird infolge des geringeren Gewichtes reduziert.

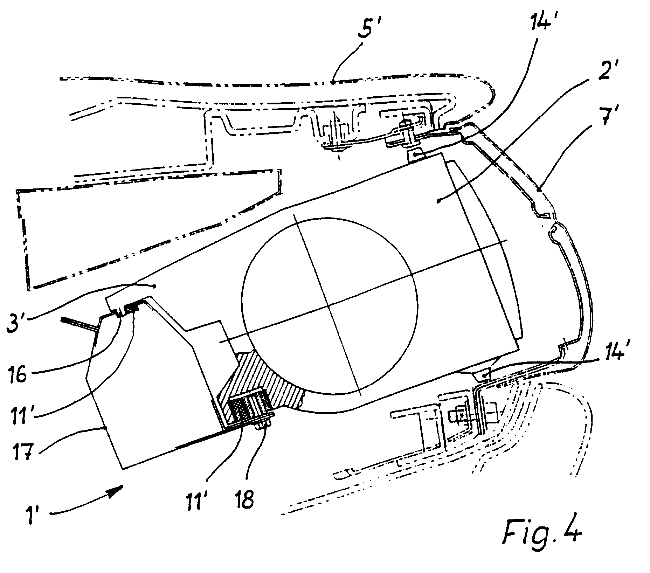

In Figur 4 ist ein Airbagmodul 1' dargestellt, bei dem das Gehäuse 2' und die Träger 3' aus einem Teil bestehen, das mit hakenartigen Zapfen 16 auf einen Strukturträger 17 aufgehängt und mit Befestigungsschrauben 18 gesichert ist. Sowohl am Zapfen 16 als auch an der Befestigungsschraube 18 sind Gummielemente 11' so angeordnet, daß das Gehäuse 2' in Schußrichtung 6 des Luftsackes um einen begrenzten Weg nachgeben kann. Mit 5' ist eine Schalttafel angedeutet, welche eine Airbagabdeckung 7' in bekannter Art aufweist. Puffer 14' verhindern unerwünschte Schwingungen. Die Funktion dieser Befestigung ist analog der Funktion bei dem eingangs beschriebenen Ausführungsbeispiel und es ergeben sich auch die gleichen Vorteile.

Neben der Vermeidung der schlagartigen Belastung der Bauteile des Airbagmoduls am Ende des Aufblasvorganges im Fall eines Crashs tritt als zusätzlicher Vorteil durch die elastische Aufhängung eine Schwingungsisolation des Airbagmoduls gegenüber dem Fahrzeugkörper während des normalen Fahrbetriebs über die gesamte Betriebszeit des Fahrzeuges ein.

## Patentansprüche

1. Airbagmodul, zumindest umfassend ein Gehäuse, einen Gasgenerator und einen im Gehäuse gehalterten Luftsack, wobei das Gehäuse an Fahrzeugstrukturteilen befestigt ist und in der Verbindungskette zwischen Fahrzeugstrukturteil (Stirnwand 4; Strukturträger 17), Gehäuse (2, 2') und Luftsackhalterahmen (20) zumindest eine Verbindungsstelle vorgesehen ist, die von in Schußrichtung (6) des Luftsakkes begrenzt nachgiebigen Elementen gebildet ist, **dadurch gekennzeichnet**, daß die nachgiebigen Elemente als Haltebuchsen (9) mit einem Gummielement (11,11') und asymmetrischem Federweg ausgebildet sind, wobei die Haltebuchsen (9) als Lagerelemente zwischen dem Gehäuse (2,2') des Airbagmoduls (1,1') und den seitlich neben diesem befindlichen Trägern (3,17) angeordnet und mit ihrem größeren Federweg in Schußrichtung (6) des Luftsackes ausgerichtet sind.

## Claims

1. Airbag module, at least including a housing, a gas generator and an airbag mounted in the housing, wherein the housing is attached to structural parts of the vehicle and in the connecting chain between structural part of the vehicle (dashboard 4; structural member 17), housing (2, 2') and airbag holding frame (20) is provided at least one connecting point which is formed by elements flexible to a limited extent in the direction of firing (6) of the airbag, characterised in that the flexible elements are constructed as holding bushes (9) with a rubber element (11) and asymmetrical spring travel, wherein the holding bushes (9) are arranged as bearing elements between the housing (2) of the airbag module (1) and the supports (3) located laterally adjacent thereto and are oriented with their greater spring travel in the direction of firing (6) of the airbag.

## Revendications

1. Module de coussin gonflable comprenant au moins un boîtier, un générateur de gaz et une poche fixée à l'intérieur du boîtier, le boîtier étant fixé à des éléments de la structure du véhicule et au moins un point de liaison qui est formé d'éléments présentant une élasticité limitée dans la direction de déploiement de la poche étant prévu dans la chaîne de liaison entre élément de structure du véhicule (paroi frontale 4; traverse 17), boîtier (2,2') et cadre-support de la poche (20), caractérisé par le fait que les éléments élastiques sont agencés sous forme de douilles de fixation (9) avec un élément en caoutchouc (11) et une course élastique asymétrique, les douilles de fixation (9) étant disposées en tant qu'éléments de support entre le boîtier (2) du module de coussin gonflable (1) et les montants (3) disposés sur le côté de celui-ci et étant orientées de manière à ce que leur course élastique maximale ait lieu dans la direction de déploiement de la poche.
